# EUROPEAN PATENT APPLICATION

(11) **EP 3 627 340 A1**
(43) Date of publication of application: **25.03.2020**
(21) Application number: 18834847.8
(22) Date of filing: 17.07.2018
(51) Int. Cl.: G06F 16/00

(54) **PROCESSING METHOD AND APPARATUS FOR PLANNING AREA INCREMENT RECORD, AND COMPUTER READABLE STORAGE MEDIUM**

(30) Priority: 17.07.2017 CN 201710580624
(71) Applicant: ZTE Corporation, Shenzhen, Guangdong 518057 (CN)
(72) Inventor: SHI, Yuanlong, Shenzhen Guangdong 518057 (CN)
(74) Representative: Baudler, Ron
(86) International application number: PCT/CN2018/095921
(87) International publication number: WO 2019/015566

(57) **Abstract**

The present disclosure relates to a processing method and apparatus for a planning area increment record, and a computer-readable storage medium. The method includes the following steps: obtaining an increment record generated by a current operation when an object of management configures data of a planning area; determining whether there is an existing operation related to the data; if there is no existing operation related to the data, determining an operation type of the current operation according to the increment record, and processing the increment record according to the determined operation type; and if there is an existing operation related to the data, determining a final operation type of the increment record according to the existing operation and the current operation, and processing the increment record according to the final operation type.

## Description

### TECHNICAL FIELD

The present disclosure relates to the technical field of network management, and in particular, to a processing method and apparatus for a planning area increment record, and a computer-readable storage medium.

### BACKGROUND

In a telecommunication network management system, data may be configured through a network management planning area, and then the data is synchronized to a network element and a network management existing network area through activation, so that data in the existing network area and the network element can always be kept consistent. When data is configured in a planning area, synchronization may be performed on only parameters modified by a user in the planning area. In this way, network overheads in synchronizing with the network element can be greatly reduced, and impact on parameters that do not need to be changed in the network element can be avoided. Therefore, an atomic operation of data configuration performed by the network element can be ensured.

Generally, two copies of data are kept in the planning area, one copy is data copied from the existing network area and used as benchmark data, and the other copy is planning data. Increment data can be obtained by comparing the planning data with the benchmark data. However, in this case, the following problems may arise. For example, when creating the planning area, there are a large quantity of input/output IO operations, so that if the quantity of planning network elements in the planning area is great, the creation time is relatively long. There is an expiration problem in the benchmark data, which may lead to inaccuracy of data sent to the network element and unnecessary overheads in updating the benchmark data. During activating data in the network element, increment data can be obtained only by comparing the planning data with benchmark data. After the data activation succeeds, it is also necessary to update the benchmark data to be the same as existing network data. In addition, it is impossible to infer a user's intention and complete an operation of the planning area according to the intention.

Therefore, problems that an increment data processing process is complex and system processing efficiency is relatively low become problems to be resolved urgently.

### SUMMARY

An aspect of embodiments of the present disclosure provides a processing method for a planning area increment record. The method includes: obtaining an increment record generated by a current operation when an object of management configures data of a planning area; determining, in response to that there is no existing operation related to the data, an operation type of the current operation according to the increment record, and processing the increment record according to the determined operation type; and determining, in response to that there is an existing operation related to the data, a final operation type of the increment record according to the existing operation and the current operation, and processing the increment record according to the final operation type.

Another aspect of the embodiments of the present disclosure provides a processing apparatus for a planning area increment record. The apparatus includes: an obtaining module configured to obtain an increment record generated by a current operation when an object of management configures data of a planning area; a determining module configured to determine whether there is an existing operation related to the data; and a change data recording module configured to determine, in response to that there is no existing operation related to the data, an operation type of the current operation according to the increment record, and process the increment record according to the determined operation type, and configured to determine, in response to that there is an existing operation related to the data, a final operation type of the increment record according to the existing operation and the current operation, and process the increment record according to the final operation type.

Still another aspect of the embodiments of the present disclosure provides a processing apparatus for a planning area increment record. The apparatus includes: a memory, a processor, and a computer program stored on the memory and executable on the processor. When the processor executes the program, the processor implements the processing method for a planning area increment record mentioned above.

Yet another aspect of embodiments of the present disclosure provides a computer-readable storage medium, storing a computer program. When the computer program is executed by a processor, the processor implements the processing method for a planning area increment record mentioned above.

### BRIEF DESCRIPTION OF THE DRAWINGS

FIG. 1 shows a processing method for a planning area increment record according to an embodiment of the present disclosure;
FIG. 2 shows a processing apparatus for a planning area increment record according to an embodiment of the present disclosure; and
FIG. 3 is a schematic structural diagram of a processing apparatus for a planning area increment record according to another embodiment of the present disclosure.

### DETAILED DESCRIPTION

To make the objectives, technical solutions, and advantages of the present disclosure clearer, the technical solutions in the embodiments of the present disclosure will be clearly and completely described below in conjunction with the accompanying drawings in the embodiments of the present disclosure. It should be understood that the described embodiments are merely some but not all of the embodiments. All other embodiments obtained by a person of ordinary skill in the art according to the embodiments of the present disclosure without creative efforts shall fall within the protection scope of the present disclosure.

The terms "includes", "has", and any variants thereof in the specification and claims of the present disclosure are intended to cover the non-exclusive inclusion. For example, a process, method, system, product, or device that "includes" or "has" a series of steps or units is not necessarily limited to those expressly listed steps or units, but may further include other steps or units that are not expressly listed or are inherent to such a process, method, system, product, or device.

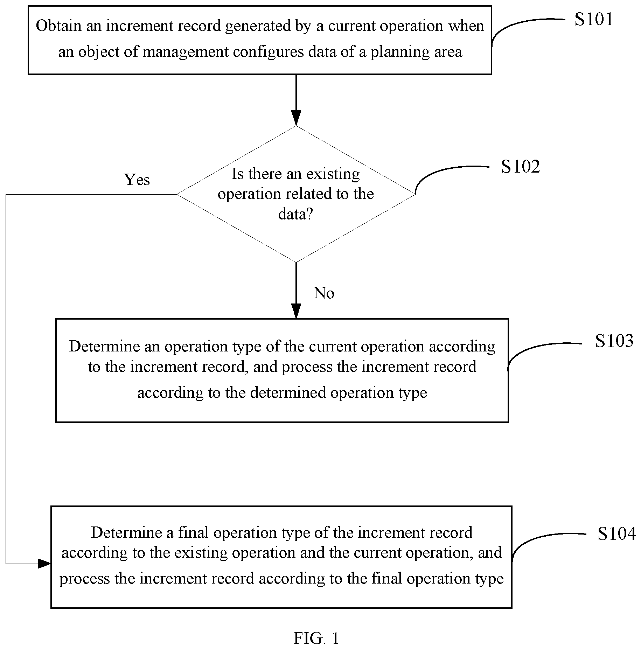

FIG. 1 shows a processing method for a planning area increment record according to an embodiment of the present disclosure. The method includes the following steps S101-S104.

At step S101, an increment record generated by a current operation is obtained when an object of management configures data of a planning area.

In the embodiment of the present disclosure, the increment record generated by the current operation may be decomposed into an operation type including one or more of adding, deleting, and modifying. The planning area increment record can be processed more conveniently by obtaining the increment record generated by the current operation when the object of management configures data of the planning area.

At step S102, it is determined whether there is an existing operation related to the data.

In the embodiment of the present disclosure, further processing of the increment record can be determined more conveniently by determining whether there is an existing operation related to the data.

At step S103, if there is no existing operation related to the data, an operation type of the current operation is determined according to the increment record, and the increment record is processed according to the determined operation type.

A step of determining, in response to that there is no existing operation related to the data, an operation type of the current operation according to the increment record, and processing the increment record according to the determined operation type (i.e., the step S103) may include: processing the increment record according to an adding operation type if there is no existing operation related to the data and the operation type of the current operation is adding; processing the increment record according to a modifying operation type if there is no existing operation related to the data and the operation type of the current operation is modifying; and processing the increment record according to a deleting operation type if there is no existing operation related to the data and the operation type of the current operation is deleting.

At step S104, if there is an existing operation related to the data, a final operation type of the increment record is determined according to the existing operation and the current operation, and the increment record is processed according to the final operation type.

In the embodiment of the present disclosure, a step of determining, in response to that there is an existing operation related to the data, a final operation type of the increment record according to the existing operation and the current operation, and processing the increment record according to the final operation type (i.e., the step S104) may include: decomposing the increment record generated by the current operation, to determine the operation type of the current operation, wherein the operation type includes one or more of adding, deleting, and modifying.

In the embodiment of the present disclosure, the step of determining, in response to that there is an existing operation related to the data, the final operation type of the increment record according to the existing operation and the current operation, and processing the increment record according to the final operation type (i.e., the step S104) may further include: determining the final operation type of the increment record according to an operation type of the existing operation related to the data and the operation type of the current operation.

In the embodiment of the present disclosure, the step of determining the final operation type of the increment record according to the operation type of the existing operation related to the data and the operation type of the current operation includes: determining, in response to that the operation type of the current operation is adding and the operation type of the existing operation related to the data is adding, the final operation type of the increment record as adding; determining, in response to that the operation type of the current operation is adding and the operation type of the existing operation related to the data is modifying, the final operation type of the increment record as modifying; and determining, in response to that the operation type of the current operation is adding and the operation type of the existing operation related to the data is deleting, the final operation type of the increment record as modifying.

The step of determining the final operation type of the increment record according to the operation type of the existing operation related to the data and the operation type of the current operation further includes: determining, in response to that the operation type of the current operation is modifying and the operation type of the existing operation related to the data is adding, the final operation type of the increment record as adding; determining, in response to that the operation type of the current operation is modifying and the operation type of the existing operation related to the data is modifying, the final operation type of the increment record as modifying; and determining, in response to that the operation type of the current operation is modifying and the operation type of the existing operation related to the data is deleting, the final operation type of the increment record as deleting.

The step of determining the final operation type of the increment record according to the operation type of the existing operation related to the data and the operation type of the current operation further includes: determining, in response to that the operation type of the current operation is deleting and the operation type of the existing operation related to the data is adding, the increment record as null, and determining that there is no final operation type of the increment record; determining, in response to that the operation type of the current operation is deleting and the operation type of the existing operation related to the data is modifying, the final operation type of the increment record as deleting; and determining, in response to that the operation type of the current operation is deleting and the operation type of the existing operation related to the data is deleting, the final operation type of the increment record as deleting.

The step of determining, in response to that there is an existing operation related to the data, the final operation type of the increment record according to the existing operation and the current operation, and processing the increment record according to the final operation type (i.e., the step S104) may further include: processing the increment record according to the final operation type.

In the embodiment of the present disclosure, the step of processing the increment record according to the final operation type includes: performing processing of combining, discarding, or adopting on the increment record according to the final operation type.

The method described above can simplify an increment data processing process and improve processing efficiency.

In a specific embodiment, when the object of management configures data of the planning area, an Operator record may be added. The name value of the record may be CMCC.

After obtaining this change data, the system may first check whether there is already an adding, a deleting, or a modifying record of the data, then process the data according to a process of adding a management object record, and finally store processed data as a new increment record of an adding type.

In an embodiment, when the object of management configures data of the planning area, the Operator record whose name value is CMCC may be modified. For example, the name value may be modified to CUCC.

The system may obtain this change data and find that the data has an increment record of the adding type. Although an operation action of a user is a modifying operation, but ultimately, the user fills in a wrong name value during an adding operation, and the modifying operation corrects the value. Therefore, the system determines that the intention of the user is still an adding operation, and finally updates the name value of the increment record of the adding type to CUCC. The increment record is still of the adding type.

In an embodiment, when the object of management configures data of the planning area, the Operator record whose name value is CUCC may be modified again. For example, the name value may be modified to CMCC again.

The system may obtain this change data and find that the data has an increment record of the adding type. According to this, the system determines that the user ultimately performs an adding operation, but the name value needs to be updated. Therefore, the system updates the name value of the increment record to CMCC. The increment record is still of the adding type.

In an embodiment, when the object of management configures data of the planning area, the Operator record whose name value is CMCC may be deleted.

The system may obtain this change data and find that the data has an increment record of the adding type. According to this, the system determines that the user first adds an operator record, but deletes the record later because the user may think that the record is improper. Finally, the system discards the change record to be deleted, and deletes an existing increment record of the adding type.

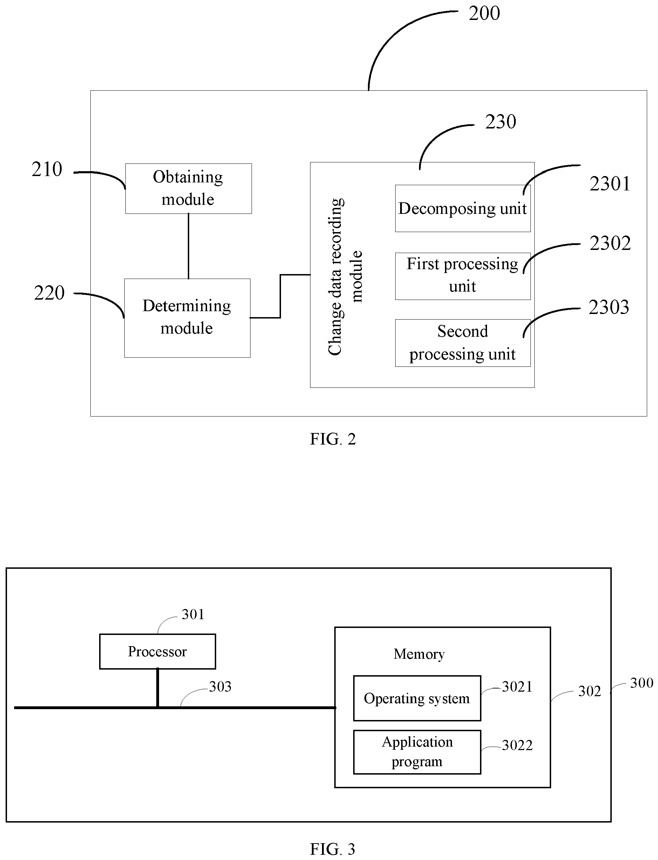

FIG. 2 shows a processing apparatus for a planning area increment record according to an embodiment of the present disclosure. The apparatus includes an obtaining module 210, a determining module 220, and a change data recording module 230.

The obtaining module 210 is configured to obtain an increment record generated by a current operation when an object of management configures data of a planning area.

The determining module 220 is configured to determine whether there is an existing operation related to the data.

The change data recording module 230 is configured to determine an operation type of the current operation according to the increment record, and process the increment record according to the determined operation type if there is no existing operation related to the data.

The change data recording module 230 is further configured to determine a final operation type of the increment record according to the existing operation and the current operation, and process the increment record according to the final operation type if there is an existing operation related to the data.

In the embodiment of the present disclosure, the change data recording module 230 includes a decomposing unit 2301, a first processing unit 2302, and a second processing unit 2303.

The decomposing unit 2301 is configured to decompose the increment record generated by the current operation, so as to determine the operation type of the current operation, wherein the operation type includes one or more of adding, deleting, and modifying.

The first processing unit 2302 is configured to determine the final operation type of the increment record according to an operation type of the existing operation related to the data and the operation type of the current operation.

In the embodiment of the present disclosure, the first processing unit 2302 is configured to determine the final operation type of the increment record according to the operation type of the existing operation related to the data and the operation type of the current operation through the following steps: determining, in response to that the operation type of the current operation is adding and the operation type of the existing operation related to the data is adding, the final operation type of the increment record as adding; determining, in response to that the operation type of the current operation is adding and the operation type of the existing operation related to the data is modifying, the final operation type of the increment record as modifying; and determining, in response to that the operation type of the current operation is adding and the operation type of the existing operation related to the data is deleting, the final operation type of the increment record as modifying.

In the embodiment of the present disclosure, the first processing unit 2302 is further configured to determine the final operation type of the increment record according to the operation type of the existing operation related to the data and the operation type of the current operation through the following steps: determining, in response to that the operation type of the current operation is modifying and the operation type of the existing operation related to the data is adding, the final operation type of the increment record as adding; determining, in response to that the operation type of the current operation is modifying and the operation type of the existing operation related to the data is modifying, the final operation type of the increment record as modifying; and determining, in response to that the operation type of the current operation is modifying and the operation type of the existing operation related to the data is deleting, the final operation type of the increment record as deleting.

In the embodiment of the present disclosure, the first processing unit 2302 is further configured to determine the final operation type of the increment record according to the operation type of the existing operation related to the data and the operation type of the current operation through the following steps: determining, in response to that the operation type of the current operation is deleting and the operation type of the existing operation related to the data is adding, the increment record as null, and determining that there is no final operation type of the increment record; determining, in response to that the operation type of the current operation is deleting and the operation type of the existing operation related to the data is modifying, the final operation type of the increment record as deleting; and determining, in response to that the operation type of the current operation is deleting and the operation type of the existing operation related to the data is deleting, the final operation type of the increment record as deleting.

The second processing unit 2303 is configured to process the increment record according to the final operation type.

In the embodiment of the present disclosure, the obtaining module 210 is configured to obtain an increment record generated by a current operation when an object of management configures data of a planning area; the determining module 220 is configured to determine whether there is an existing operation related to the data; and the change data recording module 230 is configured to determine an operation type of the current operation according to the increment record, and process the increment record according to the determined operation type if there is no existing operation related to the data, and the change data recording module 230 is further configured to determine a final operation type of the increment record according to the existing operation and the current operation, and process the increment record according to the final operation type if there is an existing operation related to the data. Therefore, the embodiment of the present disclosure can effectively resolve the problems that an increment data processing process is complex and system efficiency is relatively low.

FIG. 3 is a schematic structural diagram of a processing apparatus for a planning area increment record according to another embodiment of the present disclosure. The processing apparatus 300 for a planning area increment record shown in FIG. 3 includes at least one processor 301 and a memory 302. The components in the terminal 300 are coupled together by a bus system 303. It may be understood that, the bus system 303 is configured to implement connection and communication between these components. In addition to a data bus, the bus system 30 may further include a power bus, a control bus, and a status signal bus. However, for clear description, various types of buses in the FIG. 3 are marked as the bus system 303.

It may be understood that, the memory 302 in the embodiment of the present disclosure may be a volatile memory or a nonvolatile memory, or may include a volatile memory, a nonvolatile memory, or both. The nonvolatile memory may include a read-only memory (ROM), a programmable read-only memory (PROM), an erasable programmable read-only memory (EPROM), an electrically erasable programmable read-only memory (EEPROM), or a flash memory. The volatile memory may include a random access memory (RAM), used as an external cache. Through example but not limitative description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct rambus dynamic random access memory (DR RAM). The memory 302 in the system and method described in the embodiments of the present disclosure is to include, but not limited to, these memories and any memory of another proper type.

In some implementations, the memory 302 may store an operating system 3021 and an application program 3022. The operating system 3021 and the application program 3022 may be executable modules or data structures, or subsets or extended sets of the execution modules and the data structures.

The operating system 3021 may include various system programs, such as a frame layer, a kernel library layer, and a driver layer and is configured to implement various basic services and process a hardware-based task. The application program 3022 may include various application programs such as a media player, and a browser and is configured to implement various application services. A program configured to implement the method in the embodiments of the present disclosure may be included in the application program 3022.

In the embodiment of the present disclosure, by invoking a program or an instruction stored in the memory 302 (which may be specifically a program or an instruction stored in the application program 3022), the processor 301 may perform the method performed by the above mentioned processing apparatus for a planning area increment record.

The method disclosed in the embodiment of the present disclosure may be applied to the processor 301, or implemented by the processor 301. The processor 301 may be an integrated circuit chip, and has a signal processing capability. In an implementation process, steps in the method may be implemented by using a hardware integrated logical circuit in the processor 301, or by using instructions in a form of software. The processor 301 may be a general-purpose processor, a digital signal processor (DSP), an application-specific integrated circuit (ASIC), a field programmable gate array (FPGA) or other programmable logic devices, a discrete gate or a transistor logical device, or a discrete hardware assembly capable of realizing or performing methods, steps and logical block diagrams disclosed in the embodiment of the present disclosure. The general-purpose processor may be a microprocessor, or the processor may be any conventional processor or the like. Steps of the methods disclosed in conjunction with the embodiments of the present disclosure may be directly executed and implemented by means of a hardware decoding processor, or may be executed and implemented by using a combination of hardware and software modules in the decoding processor. A software module may be located in a storage medium in the art, such as a random access memory, a flash memory, a read-only memory, a programmable read-only memory, an electrically erasable programmable memory, a register, or the like. The storage medium may be located in the memory 302, and the processor 301 may read information in the memory 302 and implement the steps in the method in combination with hardware of the processor.

It may be understood that, these embodiments described in the present disclosure may be implemented by using hardware, software, firmware, middleware, microcode, or a combination thereof. For hardware implementation, the processing unit may be implemented in one or more application-specific integrated circuits (ASIC), a digital signal processor (DSP), a digital signal processing device (DSPD), a programmable logic device (PLD), a field-programmable gate array (FPGA), a general-purpose processor, a controller, a microcontroller, a microprocessor, other electronic units configured to execute functions of the present disclosure, or a combination thereof.

For software implementation, technologies of the embodiments of the present disclosure may be implemented by using modules (for example, a process or a function) that implements the functions of the embodiments of the present disclosure. Software code may be stored in the memory, and executed by the processor. The memory may be implemented inside or outside the processor.

In the embodiment of the present disclosure, the processor 301 is configured to implement the steps of the method described in combination with FIG. 1, and achieve the same technical effect. Detailed steps of the method are not described herein again.

A person of ordinary skill in the art may be aware that, algorithm steps and modules described in the embodiments of the present disclosure may be implemented by electronic hardware or a combination of computer software and electronic hardware. Whether the functions are implemented by hardware or software depends on particular applications and design constraint conditions of the technical solutions. A person skilled in the art may use different methods to implement the described functions for each particular application, but it should be considered that the implementation failed into the scope of the present disclosure.

An embodiment of the present disclosure further provides a computer-readable storage medium. The computer-readable storage medium stores a computer program. When the computer program is executed by a processor, the processor implements the processing method for a planning area increment record of the present disclosure, and the same technical effect can be achieved. To avoid repetition, the processing method is not described in detail herein again. The computer-readable storage medium is, for example, a read-only memory (ROM for short), a random access memory (RAM for short), a magnetic disk, or an optical disc.

It may be clearly understood by a person skilled in the art that, for the purpose of convenient and brief description, for detailed working processes of the foregoing system, apparatus, and unit, reference may be made to corresponding processes in the foregoing method embodiments, and details are not described herein again.

It should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed couplings or direct couplings or communication connections may be implemented by some interfaces. The indirect couplings or communication connections between the apparatuses or units may be implemented in electronic, mechanical, or other forms.

The units shown as separate parts may or may not be physically separate, and parts shown as units may or may not be physical units, that is, the units may be located in one position, or may be distributed on a plurality of network units. Some or all of the units may be selected according to actual requirements to implement the embodiments of the present disclosure.

In addition, functional units in the embodiments of the present disclosure may be integrated into one or more processing units, or each of the units may exist alone physically.

When the functions are implemented in a form of a software functional unit and sold or used as an independent product, the functions may be stored in a computer-readable storage medium. According to such an understanding, an essential part or the part contributing to the prior art of the technical solutions of the present disclosure, or some of the technical solutions may be implemented in a form of a software product. The software product is stored in a storage medium, and includes several instructions for instructing a computer device (which may be a personal computer, a server, a network device, or the like) to perform all or some of the steps in the methods described in the embodiments of the present disclosure. The foregoing storage medium may include any medium that can store program codes, such as a USB flash drive, a removable hard disk, an ROM, an RAM, a magnetic disk, or an optical disc.

The foregoing descriptions are merely exemplary embodiments of the present disclosure, but are not intended to limit the protection scope of the present disclosure. Any variation or replacement readily figured out by a person skilled in the art within the technical scope described in the present disclosure shall fall within the protection scope of the present disclosure. Therefore, the protection scope of the present disclosure shall be subject to the protection scope of the claims.

## Claims

1. A processing method for a planning area increment record, comprising:
obtaining an increment record generated by a current operation when an object of management configures data of a planning area;
determining whether there is an existing operation related to the data;
determining, in response to that there is no existing operation related to the data, an operation type of the current operation according to the increment record, and processing the increment record according to the determined operation type; and
determining, in response to that there is an existing operation related to the data, a final operation type of the increment record according to the existing operation and the current operation, and processing the increment record according to the final operation type.

2. The processing method according to claim 1, wherein the step of determining, in response to that there is an existing operation related to the data, the final operation type of the increment record according to the existing operation and the current operation, and processing the increment record according to the final operation type comprises:
decomposing the increment record generated by the current operation, to determine the operation type of the current operation, wherein the operation type comprises one or more of adding, deleting, and modifying;
determining the final operation type of the increment record according to an operation type of the existing operation related to the data and the operation type of the current operation; and
processing the increment record according to the final operation type.

3. The processing method according to claim 2, wherein the step of determining the final operation type of the increment record according to the operation type of the existing operation related to the data and the operation type of the current operation comprises:
determining, in response to that the operation type of the current operation is adding and the operation type of the existing operation related to the data is adding, the final operation type of the increment record as adding;
determining, in response to that the operation type of the current operation is adding and the operation type of the existing operation related to the data is modifying, the final operation type of the increment record as modifying; and
determining, in response to that the operation type of the current operation is adding and the operation type of the existing operation related to the data is deleting, the final operation type of the increment record as modifying.

4. The processing method according to claim 2, wherein the step of determining the final operation type of the increment record according to the operation type of the existing operation related to the data and the operation type of the current operation comprises:
determining, in response to that the operation type of the current operation is modifying and the operation type of the existing operation related to the data is adding, the final operation type of the increment record as adding;
determining, in response to that the operation type of the current operation is modifying and the operation type of the existing operation related to the data is modifying, the final operation type of the increment record as modifying; and
determining, in response to that the operation type of the current operation is modifying and the operation type of the existing operation related to the data is deleting, the final operation type of the increment record as deleting.

5. The processing method according to claim 2, wherein the step of determining the final operation type of the increment record according to the operation type of the existing operation related to the data and the operation type of the current operation comprises:
determining, in response to that the operation type of the current operation is deleting and the operation type of the existing operation related to the data is adding, the increment record as null, and determining that there is no final operation type of the increment record;
determining, in response to that the operation type of the current operation is deleting and the operation type of the existing operation related to the data is modifying, the final operation type of the increment record as deleting; and
determining, in response to that the operation type of the current operation is deleting and the operation type of the existing operation related to the data is deleting, the final operation type of the increment record as deleting.

6. The processing method according to claim 2, wherein the step of processing the increment record according to the final operation type comprises:
performing processing of combining, discarding, or adopting on the increment record according to the final operation type.

7. A processing apparatus for a planning area increment record, comprising:
an obtaining module configured to obtain an increment record generated by a current operation when an object of management configures data of a planning area;
a determining module configured to determine whether there is an existing operation related to the data; and
a change data recording module configured to determine, in response to that there is no existing operation related to the data, an operation type of the current operation according to the increment record, and process the increment record according to the determined operation type, and configured to determine, in response to that there is an existing operation related to the data, a final operation type of the increment record according to the existing operation and the current operation, and process the increment record according to the final operation type.

8. The processing apparatus according to claim 7, wherein the change data recording module comprises:
a decomposing unit configured to decompose the increment record generated by the current operation, to determine the operation type of the current operation, wherein the operation type comprises one or more of adding, deleting, and modifying;
a first processing unit configured to determine the final operation type of the increment record according to an operation type of the existing operation related to the data and the operation type of the current operation; and
a second processing unit configured to process the increment record according to the final operation type.

9. The processing apparatus according to claim 8, wherein the first processing unit is configured to determine the final operation type of the increment record according to the operation type of the existing operation related to the data and the operation type of the current operation through the following steps:
determining, in response to that the operation type of the current operation is adding and the operation type of the existing operation related to the data is adding, the final operation type of the increment record as adding;
determining, in response to that the operation type of the current operation is adding and the operation type of the existing operation related to the data is modifying, the final operation type of the increment record as modifying; and
determining, in response to that the operation type of the current operation is adding and the operation type of the existing operation related to the data is deleting, the final operation type of the increment record as modifying.

10. The processing apparatus according to claim 8, wherein the first processing unit is configured to determine the final operation type of the increment record according to the operation type of the existing operation related to the data and the operation type of the current operation through the following steps:
determining, in response to that the operation type of the current operation is modifying and the operation type of the existing operation related to the data is adding, the final operation type of the increment record as adding;
determining, in response to that the operation type of the current operation is modifying and the operation type of the existing operation related to the data is modifying, the final operation type of the increment record as modifying; and
determining, in response to that the operation type of the current operation is modifying and the operation type of the existing operation related to the data is deleting, the final operation type of the increment record as deleting.

11. The processing apparatus according to claim 8, wherein the first processing unit is configured to determine the final operation type of the increment record according to the operation type of the existing operation related to the data and the operation type of the current operation through the following steps:
determining, in response to that the operation type of the current operation is deleting and the operation type of the existing operation related to the data is adding, the increment record as null, and determining that there is no final operation type of the increment record;
determining, in response to that the operation type of the current operation is deleting and the operation type of the existing operation related to the data is modifying, the final operation type of the increment record as deleting; and
determining, in response to that the operation type of the current operation is deleting and the operation type of the existing operation related to the data is deleting, the final operation type of the increment record as deleting.

12. The processing apparatus according to claim 8, wherein the second processing unit is configured to process the increment record according to the final operation type through the following step:
performing processing of combining, discarding, or adopting on the increment record according to the final operation type.

13. A processing apparatus for a planning area increment record, comprising a memory, a processor, and a computer program stored on the memory and executable on the processor, wherein when the processor executes the program, the processor implements the processing method for a planning area increment record according to any one of claims 1 to 5.

14. A computer-readable storage medium, storing a computer program, wherein when the computer program is executed by a processor, the processor implements the processing method for a planning area increment record according to any one of claims 1 to 5.
